Europäisches Patentamt

European Patent Office

Office européen des brevets

(11) Publication number: **0 269 422 B1**

## EUROPEAN PATENT SPECIFICATION

(45) Date of publication of patent specification: **01.07.92**

(51) Int. Cl.⁵: **B23P 15/00**, F16C 3/14

(21) Application number: **87310374.1**

(22) Date of filing: **25.11.87**

(54) Engine crankshaft.

(30) Priority: **28.11.86 GB 8628522**

(43) Date of publication of application:
**01.06.88 Bulletin  88/22**

(45) Publication of the grant of the patent:
**01.07.92 Bulletin  92/27**

(84) Designated Contracting States:
**BE DE ES FR GB IT NL SE**

(56) References cited:
**GB-A- 421 288**
**GB-A- 1 088 510**
**US-A- 4 081 655**

(73) Proprietor: **FORD MOTOR COMPANY LIMITED**
**Eagle Way**
**Brentwood Essex CM13 3BW(GB)**
(84) Designated Contracting States:
**BE GB IT NL SE**

(73) Proprietor: **FORD-WERKE AKTIENGESELL-SCHAFT**
**Werk Köln-Niehl Henry-Ford-Strasse Post-fach 60 40 02**
**W-5000 Köln 60(DE)**
(84) Designated Contracting States:
**DE**

(73) Proprietor: **FORD FRANCE SOCIETE AN-ONYME**
**344 Avenue Napoléon Bonaparte B.P. 307**
**F-92506 Rueil Malmaison Cedex(FR)**
(84) Designated Contracting States:
**FR**

(73) Proprietor: **Ford Motor Company**
**The American Road**
**Dearborn, MI 48121(US)**
(84) Designated Contracting States:
**ES**

(72) Inventor: **Mascarenas, Paul Anthony**
**11 The Finchingfields**
**Kelvedon Hatch Brentwood Essex(GB)**

(74) Representative: **Messulam, Alec Moses et al**
**A. Messulam & Co. 24 Broadway**
**Leigh on Sea Essex SS9 1BN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method of manufacturing an engine crankshaft.

It is known to incorporate oil ducts in an engine crankshaft to enable lubrication of the main bearings and the big end bearings. Such a construction is advantageous as it allows oil to be fed from a single point to all the bearing of the crankshaft instead of oil being pumped to each main bearing individually.

In one known construction, a duct is formed by drilling bores in the crankshaft and plugging the ends of the bores. The drilling of the bores in this case is time consuming and accuracy is required to ensure that the bores are correctly aligned to form a continuous duct. Furthermore, there is a tendency for air bubbles to be trapped at discontinuities in the duct giving rise to inadequate lubrication.

In a further prior art proposal, plastics oil pipes are placed within a hollow crankshaft and a foamed plastics material is cast in the crankshaft to hold the oil pipes in place. In this case, the crankshaft is weakened especially at the webs of the cranks.

It is known from GB-A- 1,191,202 to form a camshaft having an axial passage by the steps of preparing a core assembly which comprises a steel pipe and a solid core closely fitted in the steel pipe, the solid core being coated with a release agent; placing the core assembly in a casing mould with the solid core aligned with the axis of the camshaft to be formed, pouring molten metal around the core assembly in the mould; and thereafter, upon completion of casting, withdrawing the solid core from the casting to leave a lubrication passage bounded by the steel pipe.

The need for the solid core is to prevent melting of the pipe during the casting process and of course the solid core can only be released because it is straight and runs down the axis of the camshaft. This teaching cannot be applied to crankshafts as the lubrication bore must pass around the cranks and cannot be straight. Also, a camshaft can have a fairly large central bore, permitting the use of a solid core of sufficient strength to be withdrawn in one piece after the casting process whereas large lubrication bore would weaken the webs of a crankshaft excessively.

It has been proposed in GB-A-421,288 defining the closest prior art to cast a metal tube into crankshaft to define an oil duct and later to drill holes from the bearing surfaces to intersect the oil duct. The diameter of the tube cast into the crankshaft must be small in order to reduce the weakening of the webs. If normal drilling were used to pierce the steel tube to form oil passages leading to the bearing surfaces, then a risk would arise of blocking the oil duct by the burrs occurring around the ends of the drilled bore. Deburring cannot readily be carried out and even if the burrs are successfully removed from the edges of the drilled bore, there is a risk of the oil duct being blocked by the resulting swarf.

The invention seeks to provide a method of constructing a crankshaft with a continuous oil duct feeding oil to the bearing surfaces of the crankshaft, which does not suffer from the foregoing disadvantages.

According to the present invention, there is provided a method of manufacturing a crankshaft which comprises the steps of casting a steel tube into the crankshaft and piercing bores in at least the bearing surfaces of the crank pins of the crankshaft to connect with an oil duct defined by the bore of the steel tube, wherein the bores leading from the bearing surfaces to the oil duct are formed in two parts, the first part being drilled and the second part being laser pierced.

In the present invention laser piercing techniques, which are known per se, are relied upon to provide a solution to the problem of the oil duct being blocked by swarf or burrs. Laser piercing permits a connection to be made with the oil duct without burrs and without generating swarf. Furthermore, the accuracy of drilling can be greatly increased, thereby improving the control over the flow rate of the oil. Laser piercing also avoids the risk of breakage of drill bits of very small diameter.

It is preferable that the steel tube should not approach the surface of the crankshaft too closely, in order to avoid weakening of the crankshaft. The bores to be made to connect with the oil duct therefore need to be deep. In the present invention, the whole depth of the bores is not laser pierced since it is only at the point of penetration into the steel tube that the risk of burring presents a problem. Instead therefore, the first part of the bores is drilled in a conventional manner and only the last part of the bores are laser peirced. It is not necessary that the drilled part of the bore should be of the same diameter as the laser pierced part so that the need to use small diameter drill bits can still be avoided.

Various steps may be taken to prevent melting of the tube during the casting process. A first possibility is to use a tube formed of a different metal, for example stainless steel, but this creates a possible problem because of the different properties of the two materials. Also, stainless steel would make the tube and its bending unduly costly.

The risk of melting is not the same over the whole length of the crankshaft as certain parts of the steel tube are exposed to the molten steel for longer than others and it is these parts which risk melting. In particular, a crankshaft is normally cast vertically and filled from the lower end in order to avoid air being trapped. Thus all the hot metal will flow past the lower end of the steel tube to be cast into the crankshaft whereas the upper end will be exposed to the molten metal for a shorter time.

It is possible to avoid the risk of melting of the steel tube by increasing the wall thickness of the tube either throughout its lengths or only in the regions at risk of melting. This may be achieved, for example, by a cladding on the steel tube.

A further possibility would be to arrange for a coolant to flow through the tube while the molten metal is being cast into the mould but this creates complications, requiring as it does the connection of a pressurised fluid source to the tube and this solution has not so far proved practicable.

A still further possibility is to fill the tube prior to casting of the molten metal into the mould, with a material that increases the thermal capacity. If the material has a lower melting point that the tube, it can flow out during the casting process. This solution has the limitation that only a small quantity of heat can be extracted because of the small mass of material within the tube.

An alternative possible approach is to allow the tube to melt partially but to prevent its collapse by filling it with a powder, such as fine sand. The sand will also increase the thermal capacity in order to resist melting, and can be blown out after completion of the casting.

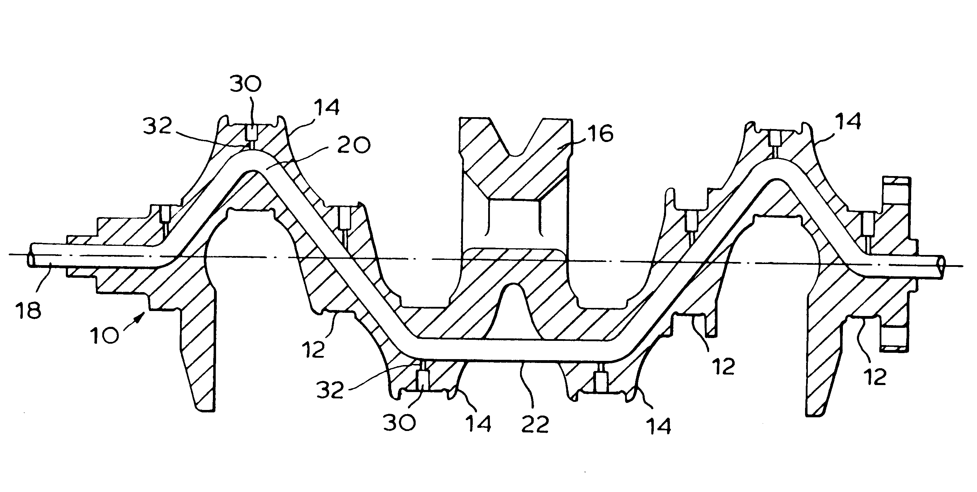

The invention will now be described further, by way of example, with reference to the accompanying drawing which is a section through a crankshaft.

The crankshaft 10 shown in the drawing has four main bearings 12 and four cranks 14. Between the two middle cranks, a balancing weight 16 is formed. The whole of the crankshaft is of cast iron construction and a steel tube 18 is cast in situ in the crankshaft 10 to define an oil duct 20 for lubricating the main bearings 12 and the big end bearings on the cranks 14.

The steel tube 18 is of mild steel which is preformed to a desired shape prior to be inserted in the casting mould. As can be seen the tube 18 is encapsulated entirely within the crankshaft 10 except for a portion 22 which is opposite the balance weight 16. In the case of a five main bearing crankshaft, the tube 18 would be totally contained within the crankshaft 10.

It is important to be able to position the tube 18 accurately during the casting process and the portion 22 is very advantageous in this respect as it can be gripped directly to determine the angular position of the tube 18 within the mould. In the case of a crankshaft in which the tube 18 is totally encapsulated, it is possible to form the crankshaft with hollow crank pins. The bores of the crank pins are formed by cores in the mould and these cores may be provided with locating recesses for the tube 18.

During casting the mould is vertical and fills from the lower end. A cladding consisting of a second layer of mild steel may be formed around the tube 18 at the lower end to prevent its melting during the casting. Alternatively, the tube may be filled prior to the molten metal being introduced into the mould, with a material to increase its thermal capacity.

After cooling of the crankshaft, it is necessary to form bores to enable oil in the oil duct 20 to reach the bearing surfaces. These are formed by drilling blind bores 30 in the bearing portions of the crankshaft to approach the steel tube 18 but not penetrate it. These bores may typically be 3.0 mm in diameter. Next, these bores 30 are deepened by laser piercing to connect with the oil duct 20, the diameter of the laser pierced part 32 of the bores 30 being typically between 0.5 mm and 1.0 mm in diameter.

Laser piercing avoids burrs which could cause blockage of the oil duct 20. Furthermore, it enables a small diameter bore to be drilled without the use of a fragile drill bit of slender diameter, such drill bits being frequently responsible for stoppages in the course of mass production of drilled components.

It is the big end bearings which present the greater problem in lubrication and the oil duct should feed oil at least to these bearings. Main bearing lubrication could be carried out separately but it is preferred that the oil duct should feed the main bearings as well as the big end bearings.

## Claims

1. A method of manufacturing a crankshaft which comprises casting a steel tube (18) into the crankshaft (10) and piercing bores (32) in at least the bearing surfaces of the crank pins of the crankshaft to connect with an oil duct defined by the bore of the steel tube, characterised in that the bores leading from the bearing surfaces to the oil duct are formed in two parts, the first part (30) being drilled and the second part (32) being laser pierced.

2. A method as claimed in Claim 1, wherein the drilled parts (30) of the bores is of greater diameter than the laser pierced parts (32) of the bores.

3. A method as claimed in claim 1 or 2, wherein the steel tube (18) has an increased wall thickness in regions at risk of melting during the casting process.

4. A method as claimed in any preceding claim, wherein the steel tube (18) is at least partially filled during the casting process.

5. A method as claimed in any preceding claim, wherein the steel tube (18) is not totally encapsulated in cast iron, and the part (22) lying outside the mould during casting serves to align the tube within the mould.

**Revendications**

1. Procédé de fabrication d'un vilebrequin, dans lequel on coule un tube d'acier (18) dans le vilebrequin (10) et on perce des trous (32) dans au moins les surfaces portantes des manetons du vilebrequin pour raccorder à un conduit d'huile défini par l'alésage du tube d'acier, caractérisé en ce que les alésages menant des surfaces portantes au conduit d'huile sont formés en deux parties, la première partie (30) étant forée et la seconde partie (32) étant percée au laser.

2. Procédé suivant la revendication 1, dans lequel les parties forées (30) des alésages ont un plus grand diamètre que les parties percées au laser (32) des alésages.

3. Procédé suivant la revendication 1 ou 2, dans lequel le tube d'acier (18) a une épaisseur de paroi accrue dans les régions à risque de fusion pendant l'opération de coulée.

4. Procédé suivant l'une ou l'autre des revendications précédentes, dans lequel le tube d'acier (18) est au moins partiellement rempli pendant l'opération de coulée.

5. Procédé suivant l'une ou l'autre des revendications précédentes, dans lequel le tube d'acier (18) n'est pas totalement noyé dans la fonte moulée et où la partie (22) se trouvant à l'extérieur du moule pendant la coulée sert à aligner le tube à l'intérieur du moule.

**Patentansprüche**

1. Methode zur Herstellung einer Kurbelwelle, wobei die Methode das Eingießen eines Stahlrohres (18) in die Kurbelwelle (10) und das Vorsehen von Bohrungen (32) zumindest in den Auflageflächen der Kurbelwellenzapfen umfaßt, um so eine Verbindung mit einem von der Bohrung des Stahlrohres definierten Ölkanal herzustellen, dadurch gekennzeichnet, daß die von den Auflageflächen zum Ölkanal führenden Bohrungen in zwei Teilen ausgebildet sind, wobei das erste Teil (30) gebohrt und das zweite Teil (32) lasergestanzt wird.

2. Methode nach Anspruch 1, wobei die gebohrten Teile (30) der Bohrungen einen größeren Durchmesser als die lasergestanzten Teile (32) der Bohrungen aufweisen.

3. Methode nach Anspruch 1 oder 2, wobei das Stahlrohr (18) in den Bereichen, in denen während des Gießvorganges ein Schmelzrisiko besteht, eine größere Wanddicke aufweist.

4. Methode nach einem der vorstehenden Ansprüche, wobei das Stahlrohr (18) während des Gießvorganges zumindest teilweise gefüllt ist.

5. Methode nach einem der vorstehenden Ansprüche, wobei das Stahlrohr (18) nicht vollständig in Gußeisen eingekapselt ist, und wobei das außerhalb der Gießform liegende Teil (22) während des Gießvorganges dazu dient, das Rohr innerhalb der Gießform auszurichten.